# EUROPEAN PATENT SPECIFICATION

(11) **EP 0 997 032 B1**
(45) Date of publication and mention of the grant of the patent: **09.06.2004**
(21) Application number: 98934640.8
(22) Date of filing: 17.07.1998
(51) Int. Cl.: H04M 17/00, H04Q 7/32

(54) **WIRELESS COMMUNICATION DEVICE WITH REPLACEABLE BATTERY AND PREPAID CALLING TIME**
DRAHTLOSE ÜBERTRAGUNGSANLAGE MIT AUSWECHSELBARER BATTERIE UND VORAUSBEZAHLTER ANRUFZEIT
DISPOSITIF DE COMMUNICATION SANS FIL MUNI D'UNE BATTERIE REMPLACABLE ET DISPOSANT D'UN TEMPS DE COMMUNICATION PREPAYE

(30) Priority: 18.07.1997 US 896619
(43) Date of publication of application: 03.05.2000
(73) Proprietor: Polaroid Corporation, Waltham, MA 02451 (US)
(72) Inventor: KEATING, William, E., Bedford, MA 01730 (US)
(74) Representative: Splanemann Reitzner Baronetzky Westendorp Patentanwälte
(86) International application number: PCT/US1998/014910
(87) International publication number: WO 1999/004549

(56) References cited:
- WO-A-96/03001
- GB-A- 2 262 685

## Description

### BACKGROUND OF THE INVENTION

### Field of the Invention

This invention relates to wireless communication devices and, in particular, to such a device capable of interfacing with a base station of a service provider and intended for occasional use without requiring a subscription with the service provider.

### Description of related art

Conventional wireless communication devices are generally supported by a service provider selected by the device user who may enter into a contractual relationship with the service provider. Cancellation of the service agreement prior to the time period agreed to may result in substantial monetary penalties. Moreover, the subscriber may be assigned a telephone number having the same area code as the wireline telephone service provided to the subscriber's residence or business. This telephone number and other ID codes associated with the wireless communication device allow the subscriber to initiate and to receive telephone calls from any subscriber connected to the public switched telephone network (PSTN).

Although a large number of subscribers to the wireless phone service will use their devices for both initiating and receiving calls, and will therefore require a conventional telephone number, there are other subscribers and many potential subscribers who may want to use their wireless communication device only occasionally or for emergencies and do not need the capability of receiving incoming calls. Such subscribers may prefer to make a one-time purchase of a wireless communication device at a reasonable cost and may subsequently want to purchase a certain amount of prepaid calling time, for example in the form of a certain number of time units, for just such occasional use.

In addition, wireless communication devices almost exclusively use rechargeable batteries to provide power to the device. Rechargeable batteries are known to provide the relatively large current required for transmitting signals, but have the drawback that the charge may not be retained over extended periods of time. In a wireless communication device intended for occasional use, it could therefore be anticipated that the subscriber may not be diligent in maintaining the rechargeable battery in its charged state, thereby preventing the wireless phone from operating properly when needed.

Emergency wireless phones and wireless phones with a limited calling time are known in the art. WO 96/03001, for example, shows a wireless phone wherein removal of a sealing means allows the phone to be switched on and the simultaneous transmission of an ID code to the telephone exchange enables access to a predetermined telephone line for a restricted period of time. The user does not need a subscription contract U.S. Patent 5,138,650 shows a wireless phone having memory means for storing a credit balance prior to usage of the phone and means for updating the credit balance. The phone can be used as long as there remains a credit balance. GB A 2 262 685 describes a wireless phone device where radio transmission from the device can be terminated either by receiving a remote termination signal or after a predetermined length of time which is determined at the time of purchase of the device or its manufacture.

The wireless communication devices described above are either intended to be disposable after expiration of the preprogrammed connect time which is rather expensive in view of the manufacturing cost of a wireless communication device, or the accounting data are managed and updated by the service provider. Therefore, there is a need for a wireless communication device for occasional use which can be purchased and operated reliably and inexpensively and which does not require a subscription contract to be in force with a service provider at all times.

### BRIEF DESCRIPTION OF THE DRAWINGS

The structure and operation of the invention, together with other objects and advantages thereof, may best be understood by reading the detailed description to follow in connection with the drawings in which unique reference numerals have been used throughout for each part and wherein:
- Fig. 1: shows a wireless communication device comprising a power source, in
accordance with the present invention, and incorporating identification and accounting means;
- Fig. 2: is an isometric view of the power source used in the device of Fig. 1;
- Fig. 3: shows a schematic block diagram of the wireless communication device of Fig. 1; and
- Fig. 4: is a flow diagram depicting the sequence of calling steps utilized in the operation of the device of Fig. 1.

### DESCRIPTION OF THE PREFERRED EMBODIMENTS

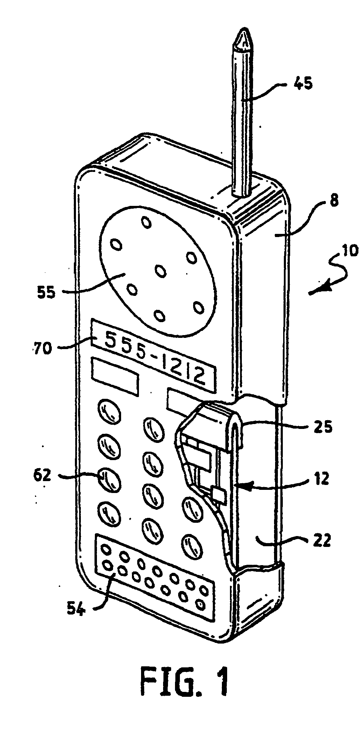

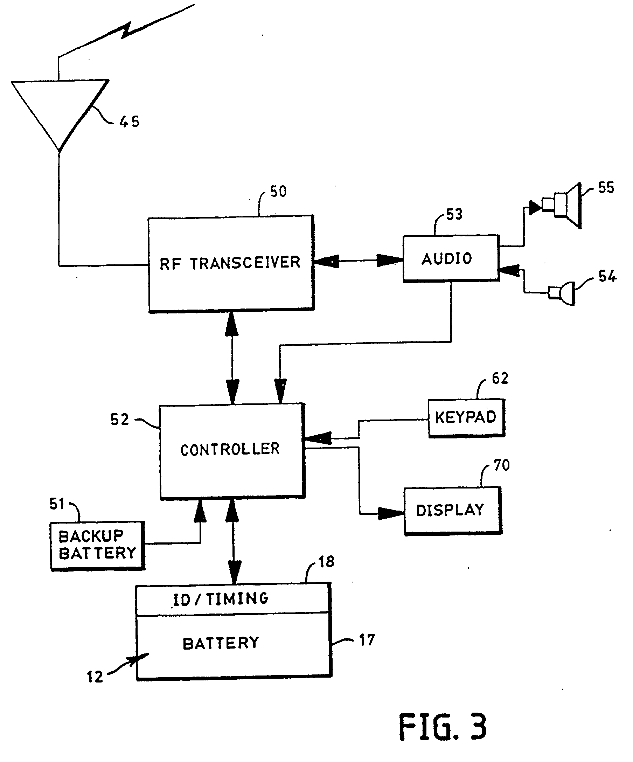

There is shown in Fig. 1 a wireless communication device 10 comprising a housing 8 to which an antenna 45 is attached for receiving and transmitting radio signals to a base station (not shown). As best seen in the block diagram of Fig. 3, wireless communication device 10 further comprises a conventional RF transceiver 50, an audio section 53, an ear phone 55, and a microphone 54, connected as shown. RF transceiver 50 is further connected to a controller 52 which handles input/output functions, such as interfacing with a keypad 62 and a display 70. RF transceiver 50 may also interface directly with audio section 53, for example, so that status information about the wireless communication device 10 may be made via ear phone 55.

In a conventional wireless communication device, the identification code of the device and/or the telephone number assigned to the device as well as other relevant registration data are typically stored in an EEPROM embedded in or associated with the a controller. The conventional wireless communication device is ready to operate after power is applied by, for example, a rechargeable battery. In wireless communication device 10, controller 52 does not store all of the necessary information for establishing an information communication channel. Therefore, when power is supplied to wireless communication device 10, the user is not provided with connection to a network of a service provider. As explained in greater detail below, wireless communication device 10 comprises an integrated power source 12 comprising a battery 17 and storage means 18, which may be a semiconductor chip or another read- and write-enabled memory device. Storage means 18 contains a unique information code allowing the user to initiate a radio telephone call of limited duration by inserting the power source 12 in the wireless communication device 10.

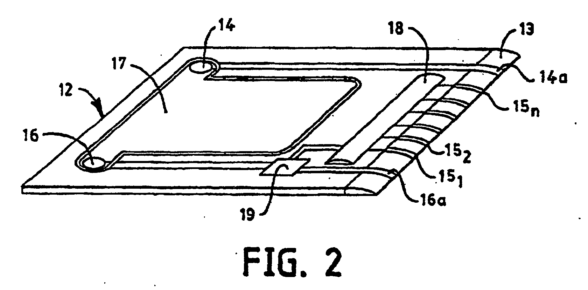

As best seen in Fig. 2, battery 17 comprises terminals 14 and 16 from which power is provided to terminals 14a and 16a located on a connector 13 adapted to mate with a receptacle 25 of wireless communication device 10. Storage means 18 is preferably integrated with power source 12 and has I/O connections (not shown) connected to terminals 15₁, 15₂, ..., 15ₙ on connector 13. Memory means 18 may also be capable of interrupting the flow of power, via a switching means 19 interposed between at least one of battery terminals 14 and 16 and a respective one of terminals 14a and 16a, as shown schematically in Fig. 2.

Wireless communication device 10 is provided with a receptacle 25 for mating with connector 13 as a means of: i) providing electrical power from battery 17 to wireless communication device 10, and ii) conveying identification codes, including possible information with respect to the remaining prepaid calling time to be transmitted to the service provider. It should be understood that, although power source 12 is shown in Fig. 3 as being connected to controller 52, power source 12 can alternatively be connected to any other component in wireless communication device 10 capable of accepting power and processing the ID codes and other information.

Integral power source 12 is preferably formed by joining battery 17, memory means 18, optional switching means 19, and connector 13 in a sealed tamperproof enclosure. Memory means 18 may comprise a read-only memory portion for storing the unique identification code of the battery and the amount of the initial prepaid calling time purchased by the user. Memory means 18 may further conprise a rewritable memory portion for tracking and/or updating the remaining calling time. The rewritable memory could either be tracked and/or updated in power source 12 itself through an internal clock without communicating information about the remaining calling time to the service provider. At the point of sale of power source 12, the user may be able to select a specific service provider which is then encoded within the ID code pre-written and stored in memory means 18, or the user may be able to select a service provider when the first call with a new power source 12' is initiated. The present invention has the advantage that the possibility for misuse or fraud is reduced, since the calling time has already been prepaid and the total accumulated calling time with a given power source 12 is limited to the prepaid calling time (substantially equal to the charge capacity of battery 17).

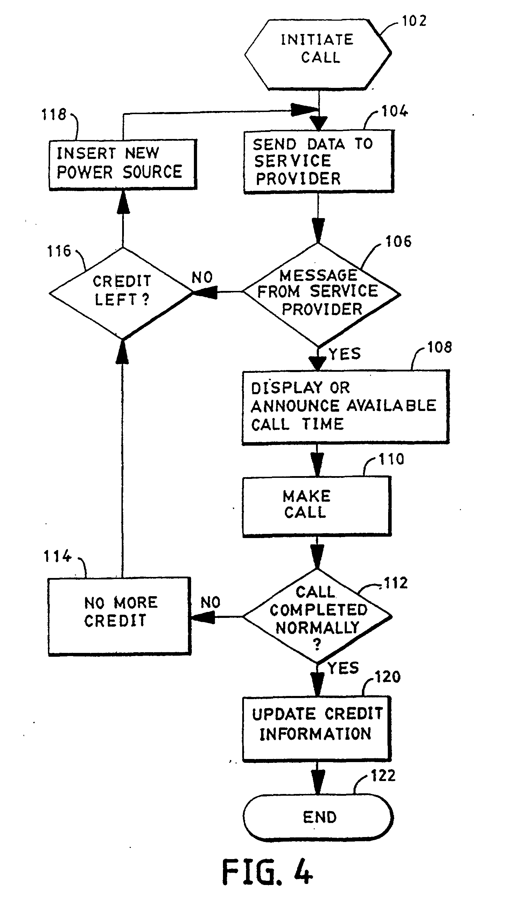

The operation of wireless communication device 10 is best understood from the flow diagram of Fig. 4. In the following embodiment, it will be assumed that a specific service provider has been pre-selected. With power source 12 connected to device 10, the user initiates a call in step 102 by using keys of keypad 62 such as, for example a SEND key. In step 104, data stored in memory means 18 (e.g., the ID code of the power source 12 or information about the calling time balance) are communicated to the service provider. If these data are valid, the service provider sends a message to wireless communication device 10 enabling the initiated call to proceed. If these data are not valid, then the service provider will either not respond or will send a message that the call is not allowed.

If the call cannot proceed, the user may be able to check the remaining calling time balance either via display 70 or the balance may be announced by audio signals via ear phone 55. In this situation, the calling time balance will most likely be zero and the user will have to insert a new power source 12" and initiate a new call in step 102.

If the call is allowed to proceed in step 106, the remaining calling time balance may be communicated to the user in the manner described above and the call is set up in step 110. At step 112, the call can terminate in two ways. If the call is shorter than the remaining calling time balance, then the call is completed normally, the calling time balance is updated in step 120, either in a self-contained mode, by updating the balance in memory means 18 without communicating balance information to and/or receiving balance information from the service provider, or the calling time balance is updated at the end of the call by a signal from the service provider.

If the duration of the call approached the remaining calling time balance, then the user will be notified in step 114, preferably by an audio message generated in wireless communication device 10, and advised to insert a new power source 12' with a sufficient calling time balance and to redial the call. Alternatively, a backup battery 51 could be incorporated wireless communication device 10 to permit changing power source 12 within a certain short time without losing the radio connection.

As noted above, wireless communication device 10 does not require a standard telephone number since device 10 is not intended to receive incoming telephone calls. Consequently, the ID code is not restricted to a combination of ten digits, as is customary, for example, in the USA. According to the Common Air Interface (CAI) protocol, the ID number may contain up to 64 bits which could easily accommodate the projected number of single use power sources 12 of the invention, wherein each ID number is used only once.

## Claims

1. A wireless communication device (10) suitable for interfacing with a wireless telephone network of a service provider without requiring a subscription with the service provider, having a communication means (50) for transmitting information of intelligence to and receiving such information from the wireless telephone network; having a removable power means (12) said power means (12) comprising a battery (17) and electrically interfacing with said communication means (50), said wireless communication (10) device being **characterized by**:
a memory means (18) non-detachably secured to and integral with said power means (12) and comprising information code for uniquely identifying said power means (12) and a prepaid calling time period;
means to maintain the interface with the wireless telephone network as long as the accumulated calling time is less than the prepaid calling time period.

2. The wireless communication device of claim 1, wherein said information code is different from a valid telephone number of a public telephone network.

3. The wireless communication device of claim 1, wherein said battery (17) is not rechargeable.

4. The wireless communication device of claim 3, wherein said battery (17) is capable of providing power to said communication means (50) for a time period which is not significantly longer than the duration of the prepaid calling time period.

5. The wireless communication device of claim 1, wherein the service provider is selected when the power means is purchased.

6. The wireless communication device of claim 1, wherein said memory means (18) further comprises updating means for tracking and updating the accumulated calling time without requiring communication with the service provider.

7. The wireless communication device of claim 6, wherein said power means (12) further comprises switching means (19) electrically connected to said battery (17) and activated by said memory means (18) for disconnecting power to said communication means (50) when the accumulated calling time exceeds the prepaid calling time period.

8. The wireless communication device of claim 1 further comprising a backup battery (51) for supplying electrical power to said communication means (50) for allowing the wireless communication device to remain connected to the wireless telephone network for a certain period of time during which time the power source in the wireless communication device can be exchanged for a different power source having a new prepaid calling time period.

9. A method for allowing a user to initiate a radio telephone call from a wireless communication device capable of interfacing with a wireless telephone network of a service provider without requiring a subscription with the service provider, said wireless communication device adapted to operate by means of a removable power source, said method comprising the steps of:
establishing a call connection to the wireless network and allowing said call connection to continue until the accumulated calling time exceeds the prepaid calling time period;
alerting the user when the accumulated calling time exceeds the prepaid calling time period; and
prompting the user to insert a new power source which includes an integral memory means containing information relating to a new prepaid calling time period, in order to continue said connected call or to establish a new call connection.

## Patentansprüche

1. Drahtlose Übertragungsvorrichtung (10), die zum Koppeln an ein drahtloses Telefonnetz eines Dientstanbieters geeignet ist, ohne dass eine vertragliche Bindung an den Dienstanbieter erforderlich ist, mit einer Übertragungseinrichtung (50) zum Senden von informativen Mitteilungen an das drahtlose Telefonnetz sowie zum Empfang derartiger Informationen von dem drahtlosen Telefonnetz; mit einer entfernbaren Energieeinrichtung (12), wobei die Energieeinrichtung (12) eine Batterie (17) aufweist und elektrisch mit der Kommunikationseinrichtung (50) gekoppelt ist, wobei die drahtlose Kommunikationsvorrichtung (10) **gekennzeichnet ist durch**:
eine Speichereinrichtung (18), die nicht entfernbar an der Energieeinrichtung (12) befestigt und integral mit dieser verbunden ist und einen Informationscode zur eindeutigen Identifikation der Energieeinrichtung (12) sowie einer im Voraus bezahlten Anrufzeitdauer aufweist;
eine Einrichtung zur Aufrechterhaltung der Kopplung an das drahtlose Telefonnetz, so lange die Gesamtanrufzeit geringer ist als die im Voraus bezahlte Anrufzeitdauer.

2. Drahtlose Kommunikationsvorrichtung gemäß Anspruch 1, **dadurch gekennzeichnet, dass** der Informationscode sich von einer gültigen Telefonnummer eines öffentlichen Telefonnetzes unterscheidet.

3. Drahtlose Kommunikationsvorrichtung gemäß Anspruch 1, **dadurch gekennzeichnet, dass** die Batterie (17) nicht wiederaufladbar ist.

4. Drahtlose Kommunikationsvorrichtung gemäß Anspruch 3, **dadurch gekennzeichnet, dass** die Batterie (17) in der Lage ist, an die Kommunikationseinrichtung (50) für eine Zeitdauer Energie zu liefern, die nicht wesentlich länger ist als die Spanne der im Voraus bezahlten Anrufzeitdauer.

5. Drahtlose Kommunikationsvorrichtung gemäß Anspruch 1, **dadurch gekennzeichnet, dass** der Dienstanbieter beim Kauf der Energieeinrichtung gewählt wird.

6. Drahtlose Kommunikationsvorrichtung gemäß Anspruch 1, **dadurch gekennzeichnet, dass** die Speichereinrichtung (18) weiter eine Aktualisierungseinrichtung zum Verfolgen und Aktualisieren der Gesamtanrufzeit, ohne eine Verbindung zu dem Dienstanbieter erforderlich zu machen, aufweist.

7. Drahtlose Kommunikationsvorrichtung gemäß Anspruch 6, **dadurch gekennzeichnet, dass** die Energieeinrichtung (12) weiter eine Schalteinrichtung (19) aufweist, die elektrisch mit der Batterie (17) verbunden ist und durch die Speichereinrichtung (18) betätigt wird, um die Energiezufuhr zu der Kommunikationseinrichtung (50) zu unterbinden, wenn die Gesamtanrufzeit die im Voraus bezahlte Anrufzeitdauer übersteigt.

8. Drahtlose Kommunikationsvorrichtung gemäß Anspruch 1, welche weiter eine Batterie (51) als Reserve zum Liefern elektrischer Energie an die Kommunikationseinrichtung (50) aufweist, um es der drahtlosen Kommunikationsvorrichtung zu erlauben, die Verbindung mit dem drahtlosen Telefonnetz für eine bestimmte Zeitdauer aufrechtzuerhalten, während welcher Zeit die Energiequelle in der drahtlosen Kommunikationsvorrichtung gegen eine andere Energiequelle mit einer neuen im Voraus bezahlten Anrufzeitdauer ausgetauscht werden kann.

9. Verfahren, um es einem Anwender zu ermöglichen, einen Funktelefonanruf von einer drahtlosen Kommunikationsvorrichtung aus zu tätigen, die in der Lage ist, sich an ein drahtloses Telefonnetz eines Dienstanbieters zu koppeln, ohne dass eine vertragliche Bindung an den Dienstanbieter erforderlich ist, wobei die drahtlose Kommunikationsvorrichtung dafür ausgelegt ist, mit Hilfe einer entfernbaren Energiequelle zu arbeiten, wobei das Verfahren folgende Schritte aufweist:
Herstellen einer Rufverbindung zu dem drahtlosen Netz und Erlauben einer Fortdauer der Rufverbindung bis die Gesamtanrufzeit die im Voraus bezahlte Anrufzeitdauer übersteigt;
Warnen des Anwenders, wenn die Gesamtanrufzeit die im Voraus bezahlte Anrufzeitdauer übersteigt; und
Auffordern des Anwenders zum Einführen einer neuen Energiequelle, die eine integrale Speichereinrichtung aufweist, welche Speichereinrichtung Informationen bezüglich einer neuen im Voraus bezahlten Anrufzeitdauer enthält, um den im Moment getätigten Anruf fortzusetzen oder eine neue Rufverbindung herzustellen.

## Revendications

1. Dispositif de communication sans fil (10) pouvant être connecté à un réseau de téléphone sans fil d'un prestataire de services sans nécessiter d'abonnement chez le prestataire de services, comportant un moyen de communication (50) servant à transmettre de l'information au réseau de téléphone sans fil et à recevoir ce type d'information dudit réseau, comportant un moyen d'alimentation amovible (12), ledit moyen d'alimentation (12) comprenant une batterie (17) et étant connecté électriquement audit moyen de communication (50), ledit dispositif de communication sans fil (10) étant **caractérisé par** :
un moyen de mémoire (18) fixé de manière non détachable et intégré audit moyen d'alimentation (12) et comprenant un code d'information pour identifier de façon unique ledit moyen d'alimentation (12) et une durée de temps d'appel prépayé ;
un moyen pour maintenir la connexion avec le réseau de téléphone sans fil tant que le temps d'appel cumulé est inférieur à la durée de temps d'appel prépayé.

2. Dispositif de communication sans fil selon la revendication 1, dans lequel ledit code d'information est différent d'un numéro de téléphone valide d'un réseau de téléphone public.

3. Dispositif de communication sans fil selon la revendication 1, dans lequel ladite batterie (17) n'est pas rechargeable.

4. Dispositif de communication sans fil selon la revendication 3, dans lequel ladite batterie (17) est capable de fournir de l'électricité audit moyen de communication (50) pendant une durée qui n'est pas considérablement plus longue que la durée de temps d'appel prépayé.

5. Dispositif de communication sans fil selon la revendication 1, dans lequel le prestataire de services est choisi au moment de l'achat du moyen d'alimentation.

6. Dispositif de communication sans fil selon la revendication 1, dans lequel ledit moyen de mémoire (18) comprend en outre un moyen de mise à jour pour suivre et mettre à jour le temps d'appel cumulé sans nécessiter de communication avec le prestataire de services.

7. Dispositif de communication sans fil selon la revendication 6, dans lequel ledit moyen d'alimentation (12) comprend en outre un moyen de commutation (19) relié électriquement à ladite batterie (17) et activé par ledit moyen de mémoire (18) pour couper l'alimentation dudit moyen de communication (50) lorsque le temps d'appel cumulé dépasse la durée de temps d'appel prépayé.

8. Dispositif de communication sans fil selon la revendication 1, comprenant en outre une batterie de secours (51) pour fournir du courant électrique audit moyen de communication (50) afin de permettre au dispositif de communication sans fil de rester connecté au réseau de téléphone sans fil pendant une certaine durée au cours de laquelle la source d'alimentation du dispositif de communication sans fil peut être échangée avec une source d'alimentation différente ayant une nouvelle durée de temps d'appel prépayé.

9. Procédé destiné à permettre à un utilisateur d'établir un appel radiotéléphonique depuis un dispositif de communication sans fil pouvant être connecté à un réseau de téléphone sans fil d'un prestataire de services sans nécessiter d'abonnement chez le prestataire de services, ledit dispositif de communication sans fil étant adapté pour fonctionner au moyen d'une source d'alimentation amovible, ledit procédé comprenant les étapes consistant à :
établir une connexion d'appel au réseau sans fil et laisser ladite connexion d'appel durer jusqu'à ce que le temps d'appel cumulé dépasse la durée de temps d'appel prépayé ;
prévenir l'utilisateur lorsque le temps d'appel cumulé dépasse la durée de temps d'appel prépayé ; et
demander à l'utilisateur d'insérer une nouvelle source d'alimentation qui comprend un moyen de mémoire intégré contenant des informations concernant une nouvelle durée de temps d'appel prépayé, afin de prolonger ledit appel établi ou d'établir une nouvelle connexion d'appel.
